(19) Europäisches Patentamt
European Patent Office
Office européen des brevets

(11) **EP 2 811 773 B1**

(12) **EUROPEAN PATENT SPECIFICATION**

(45) Date of publication and mention
of the grant of the patent:
**29.06.2016 Bulletin 2016/26**

(21) Application number: **12867324.1**

(22) Date of filing: **29.05.2012**

(51) Int Cl.:
***H04W 16/26*** (2009.01)

(86) International application number:
**PCT/CN2012/076210**

(87) International publication number:
**WO 2013/113198 (08.08.2013 Gazette 2013/32)**

(54) **WIRELESS COMMUNICATION COVERAGE METHOD AND SYSTEM**

SYSTEM UND VERFAHREN ZUR ABDECKUNG EINER DRAHTLOSEN KOMMUNIKATION

PROCÉDÉ ET SYSTÈME DE COUVERTURE POUR COMMUNICATIONS SANS FIL

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **03.02.2012 CN 201210024387**

(43) Date of publication of application:
**10.12.2014 Bulletin 2014/50**

(73) Proprietor: **ZTE Corporation
Shenzhen, Guangdong 518057 (CN)**

(72) Inventor: **CHEN, Jixun
Shenzhen
Guangdong 518057 (CN)**

(74) Representative: **Modiano, Micaela Nadia et al
Modiano & Partners
Thierschstrasse 11
80538 München (DE)**

(56) References cited:
**EP-A2- 2 282 413      CN-A- 102 026 210
CN-A- 102 083 122      US-A1- 2010 074 183**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

## Description

### TECHNICAL FIELD

The disclosure relates to the technical field of wireless communications, and greater particularly to a method and system for implementing wireless communication coverage.

### BACKGROUND

According to data from the International Union of Railway (UIC), about 13.4 thousands of kilometers of high-speed rails have come into use in the world by the end of March, 2010. About 28 thousands of kilometers of high-speed rails are being constructed or planned to be constructed, which accounts for 68% of the total market. In the next three years, it is estimated that the total investment on the global high-speed railways is up to about 200 billion dollars, wherein greater than 8 billion dollars are used for the wireless communication system. With the rapid development of the wireless communication technology, the requirements of high-speed railway users on high-speed data service grow sharply as well. Whereas, the existing 3rd Generation (3G) network can only provide a low data speed, and it cannot meet the multi-service requirements of wireless communication system in the future high-speed railway. Therefore, the solution for the coverage of Long-Term Evolution (LTE) in the high-speed railway will be the focus of the operator in the future.

For a wireless communication system, many problems may occur once the moving speed of a User Equipment (UE) reaches 350 km/h. For example, the large Doppler frequency offset of the system may affect the quality of the service, the increase of penetration loss of the train causes a higher requirement on the power consumption of the UE, and the high speed of the train causes the UE to switch, select and reselect a cell frequently. In comparison with a common scenario, the UE, when in a high-speed moving scenario, such as in the high-speed railway, resides in each cell coverage area on the way for a very short time due to its high moving speed. However, in such a high-speed moving environment, due to the deterioration of quality of the railway, it may take a longer time for the measurement and signaling interaction required in the communication process of the UE, such as residing, accessing, reselecting and switching a cell. Moreover, the frequent switching may worsen the user experience, so as to affect the whole performance of the system.

The existing solution generally employs a network coverage manner of a Building Base Band Unit (BBU) plus multiple Radio Remote Units (MRRUs) to expand the cell coverage. During uplink processing, before the baseband processing of the system, the uplink data of each Cell Portion (CP) sent from the RRUs is combined and then is subjected to baseband processing; and during downlink processing, each RRU only copies and sends the data simply. Such coverage solution is simple to implement, but the efficiency of the system is low and the whole performance of the system cannot be improved effectively.

### SUMMARY

In view of this, the disclosure provides a method for radio communication coverage and a system for radio communication coverage, so as to solve such problems as switching caused by the mobility of the UE.

The technical solutions of the disclosure are provided as follows:

A method for implementing wireless communication coverage according to claim 1 is provided.

Further, a system for implementing wireless communication coverage according to claim 5 is provided.

Preferred embodiments are disclosed in dependent claims.

### BRIEF DESCRIPTION OF THE DRAWINGS

Fig. 1 is a flow chart of a method for implementing wireless communication coverage according to the disclosure;

Fig. 2 is a flow chart of a method for implementing wireless communication coverage according to a first embodiment of the disclosure;

Fig. 3 is a flow chart of a method for implementing wireless communication coverage according to a second embodiment of the disclosure; and

Fig. 4 is a block diagram of a system for implementing wireless communication coverage according to the disclosure.

## DETAILED DESCRIPTION

A super cell consists of multiple legacy neighbor cells, and each legacy cell in the super cell is called a CP. Multiple CPs belong to a same cell logically and share same cell resources, such as cell ID, primary and secondary synchronization signals, and Cell Reference Signal (CRS)/Demodulation Reference Signal (DMRS)/channel Sounding Reference Signal (SRS) sequence, and etc. There is no mobility problem between different CPs. The mobility problem has evolved to detection and scheduling between different CPs of a cell. The super cell consists of multiple CPs, which belong to a same cell logically. There is no problem with mobility management in a network layer among different CPs, which seem to be multiple distributed cells converted from a centralized. The areas originally covered by multiple cells are converted into coverage sub-areas by using the super cell technology, so that the coverage sub-areas are combined into a cell. During high-speed moving, the inter-cell handoff has evolved to an intra-cell scheduling problem.

A single evolved NodeB (eNB) supports multiple cells (which further form a super cell), multiple RRUs belonging to a same super cell are deployed in a back-to-back form, directional high-gain antennas are employed, and the problem of violent fluctuation of downlink demodulation performance nearby a mast (the overlapped area of two RRUs) during downlink transmission is solved by adding a delay.

There are multiple CPs in a super cell, and the power of a same UE received in each CP is different. Thereby, according to the energy symmetry between the uplink and the downlink, different CPs perform transmission at a same power but their receiving powers at the receiving end of the UE are different from each other. An active CP capable of communicating with the UE indicates that a receiving power at the UE, which corresponds to a transmit power of the active CP, has an influence on the receiving performance of the UE to a certain extent. Therefore, through judgment of an active set under a certain condition, it may be determined that a CP belonging to an active set can communicate with the UE in real time, while a CP belonging to an inactive set cannot communicate with the UE.

According to various aspects of the disclosure, when a User Equipment (UE) accesses a super cell, a network side configures a Cell Portion (CP) set for the UE according to CP configuration of the super cell; the network side determines an active CP set for the UE according to the received receiving power associated with the UE in each CP; and the UE communicates with a CP in the active CP set normally.

To describe the subjec matter and advantages of the disclosure greater clearly, the disclosure is further explained below with reference to the embodiments and the accompanying drawings in detail.

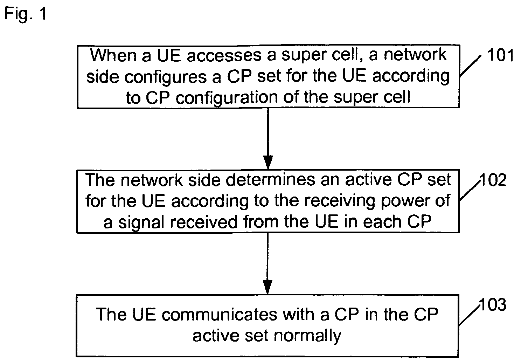

Fig. 1 is a flow chart of a method for implementing wireless communication coverage according to the disclosure. As shown in Fig. 1, the method includes the following steps.

Step 101: when a UE accesses a super cell, a network side configures a CP set for the UE according to CP configuration of the super cell.

Specifically, after the UE accesses the super cell, the CP set configured for the UE by the network side includes all CPs in the super cell.

Step 102: the network side determines an active CP set for the UE according to a received receiving power associated with the UE in each CP.

In an embodiment, before this step is performed, the network side may count the CPs included in the CP set; when the number of the CPs is equal to 1, the network side determines that active CP sets of all UEs in the super cell are the same as the CP set, and when the number of CP is greater than 1, step 102 is executed.

Specifically, the step that the network side determines an active CP set for the UE according to the received receiving power associated with the UE in each CP includes that: the network side obtains, for each CP, an average receiving power of the UE in a single resource block (RB) according to the received receiving powers of SRSs from the UE in each CP; obtains a maximum value of the average receiving powers and acquires a reference receiving power of the UE in each CP according to the maximum value; and acquires a smooth value of the reference receiving power of the UE in each CP according to the reference receiving power and a preset smooth factor. When the smooth value is greater than or equal to the preset judgment threshold for the active CP set, the CP with which the smooth value is associated belongs to the active CP set of the UE.

Furthermore, when not receiving the receiving power of SRS from the UE in each CP, the network side obtains the average receiving power of the UE in a single RB of each CP according to a receiving power of PUSCH received from the UE in each CP.

Step 103: the UE communicates with the CP in the active CP set normally.

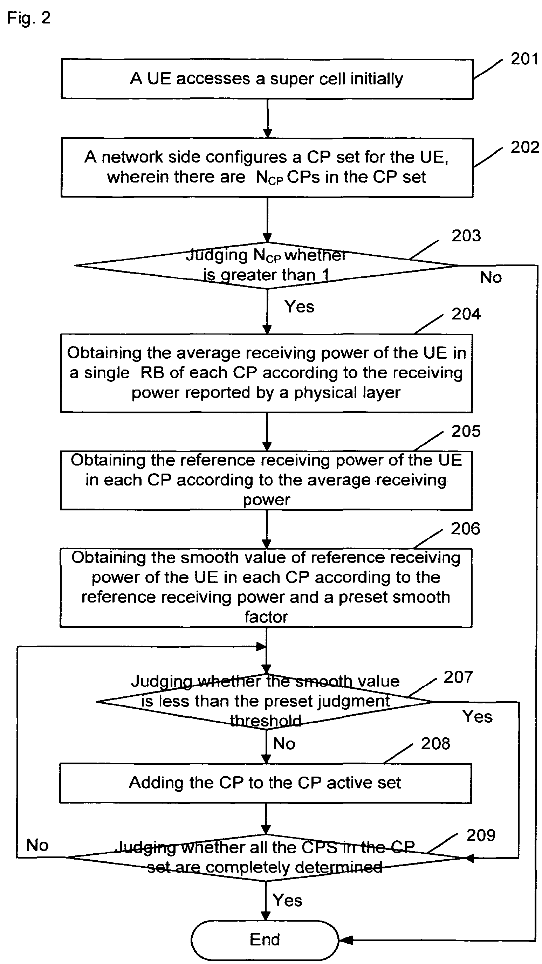

Fig. 2 is a flow chart of a method for implementing wireless communication coverage according to a first embodiment of the disclosure. As shown in Fig. 2, the method includes the following steps.

Step 201: a UE accesses a super cell initially.

Step 202: a network side configures a CP set for the UE according to CP configuration of the super cell, wherein there are $N_{cp}$ CPs in the CP set.

Step 203: the network side judges whether $N_{cp}$ is greater than 1, if so, Step 204 is executed; otherwise, when $N_{cp} = 1$, it indicates that the super cell is a single CP cell, the judgment for an active set is not required, the active CP sets of all the UEs in the super cells are configured as the CP set, and the current processing flow is ended.

Step 204: when $N_{cp} > 1$, the network side obtains, for each CP, an average receiving power $P_{Aver}(UE_{ID},CP_{ID})$ of the UE in a single RB according to the received receiving power $P_{Rec}$ of SRS or PUSCH from the UE in each CP reported by a physical layer.

Specifically, according to the received receiving power $P_{Rec}$ of the SRS or PUSCH from the UE in each RB of each CP, which is reported to the MAC layer by the physical layer, the network side coverts the bandwidth occupied by the SRS or PUSCH into a linear value, and then averages the receiving powers to result in an average receiving power $P_{Aver}(UE_{ID},CP_{ID})$ associated with the UE in a single RB of each CP. Additionally, when both the receiving powers of the PUSCH and the SRS are received, the receiving power of the SRS is employed preferentially.

Step 205: a maximum value $P_{Aver}(UE_{ID},CP_{ID})$ of average receiving powers in each CP is obtained from the average receiving powers $P_{MAX}(UE_{ID})$ of the UE in a single RB of each CP, and then the reference receiving power $P_{Ref}(UE_{ID},CP_{ID})$ of the UE in each CP is acquired.

$P_{Ref}(UE_{ID},CP_{ID})$ is obtained specifically by the following formula:

$$P_{Ref}(UE_{ID},CP_{ID}) = P_{Aver}(UE_{ID},CP_{ID}) / P_{MAX}(UE_{ID})$$

Step 206: the network side obtains the smooth value $P_{Ref}(UE_{ID},CP_{ID},t)$ of reference receiving power of the UE in each CP according to the reference receiving power and a preset smooth factor.

$P_{Ref}(UE_{ID},CP_{ID},t)$ is obtained specifically by the following formula:

$$\overline{P}_{Ref}(UE_{ID},CP_{ID},t) = (1-\alpha) \times \overline{P}_{Ref}(UE_{ID},CP_{ID},t-1) + \alpha \times P_{Ref}(UE_{ID},CP_{ID})$$

In the formula, $\alpha$ is a smooth factor of uplink receiving power, and $\overline{P}_{Ref}(UE_{ID},CP_{ID},t-1)$ is a smooth value at time $t$-1.

Step 207: It is determined whether the smooth value is less than the preset judgment threshold of active CP set of the UE, if not, Step 208 is executed, otherwise, Step 209 is executed.

Step 208: When $\overline{P}_{Ref}(UE_{ID},CP_{ID},t) \geq Thr_{cp}$, the CP belongs to the active CP set of the UE, and the network side adds the CP to the active CP set of the UE, where $Thr_{cp}$ is a preset judgment threshold for the active CP set.

Step 209:When $\overline{P}_{Ref}(UE_{ID},CP_{ID},t) < Thr_{cp}$, the CP does not belong to the active CP set of the UE, and the network side further judges whether all the CPs in the CP set are completely determined, if so, the current flow is ended, otherwise, Step 207 is executed.

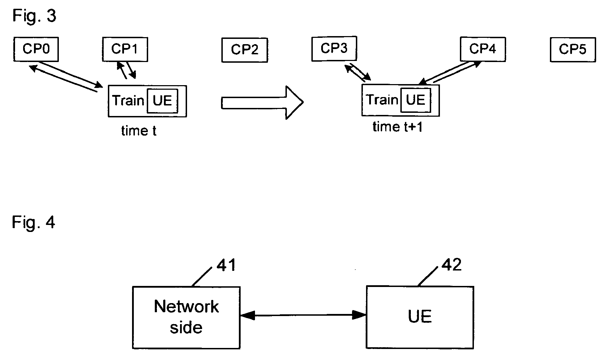

Fig. 3 is a flow chart of a method for implementing wireless communication coverage according to a second embodiment of the disclosure. As shown in Fig. 3, in the second embodiment, the UE is in a high speed moving train. Specifically, the second embodiment includes the following steps.

Step 301: a UE accesses a super cell initially.

Step 302: at time t, when a network side determines that the active CP set of the UE in the super cell includes CP0 and CP1, normal uplink and downlink traffic are carried out between the UE and CP0 as well as CP1.

Step 303: at time t+1, the train continues moving forward, at this time, when the network side determines that the active CP set of the UE in the super cell includes CP3 and CP4, normal uplink and downlink traffic are carried out between the UE and CP3 as well as CP4.

The network side can determine in real time which CP(s) the active CP set includes by using the method in the first embodiment, and further updates the active CP set.

Fig. 4 is a block diagram of a system for implementing wireless communication coverage according to the disclosure. As shown in Fig. 4, the system includes a network side 41 and a UE 42.

The network side 41 is configured to, after the UE 42 accesses a super cell, configure a CP set for the UE 42 according to CP configuration of the super cell, and determine an active CP set for the UE 42 according to the receiving power received from the UE 42 in each CP.

The UE 42 is configured to communicate with the CP in the active CP set normally.

The network side 41 is specifically configured to configure a CP set, which includes all the CPs in the super cell, for the UE 42.

Furthermore, the network side 41 may be further configured to obtain the number of CPs in the CP set, when the number of CPs is 1, determine that the active CP sets of all the UEs 42 in the super cell are the same as the CP set, and when the number of CPs is greater than 1, determine the active CP set according to the receiving power of a signal received from the UE 42 in each CP.

The network side is specifically configured to obtain the average receiving power of the UE in a single RB of each CP according to the received receiving power of the SRS from the UE in each CP, obtain the maximum value of average receiving powers, acquire the reference receiving power of the UE in each CP according to the maximum value, and obtain the smooth value of reference receiving power of the UE in each CP according to the reference receiving power and a preset smooth factor. When the smooth value is greater than or equal to the preset judgment threshold of the active CP set, the CP with which the smooth value is associated belongs to the active CP set of the UE 42.

Furthermore, the network side 41 may be further configured to obtain the average receiving power of the UE 42 in a single RB in each CP according to the receiving power of PUSCH received from the UE 42 in each CP when not receiving the receiving power of SRS from the UE 42 in each CP.

The above are only examples of the disclosure, and are not intended to limit the scope of protection of the claims of the disclosure as appended.

**Claims**

1.    A method for implementing wireless communication coverage in an LTE system, comprising:

   when a User Equipment, UE, accesses a super cell, configuring (101), by a network side, a Cell Portion, CP, set for the UE according to CP configuration of the super cell;
   determining (102), by the network side, an active CP set of the UE according to a receiving power of a signal received from the UE in each CP; and
   communicating (103), by the UE, with a CP in the active CP set normally;
   **characterized in that**,
   the determining, by the network side, the active CP set of the UE according to the receiving power of the signal received from the UE in each CP comprises:

      obtaining, by the network side, an average receiving power of the UE in a single Resource Block, RB, of each CP, according to the receiving power of a channel Sounding Reference Signal, SRS, received from the UE in each CP;
      obtaining, by the network side, a maximum value of the average receiving powers, and acquiring a reference receiving power of the UE in each CP according to the maximum value; and
      acquiring, by the network side, a smooth value of the reference receiving power of the UE in each CP according to the reference receiving power and a preset smooth factor;
      wherein a CP with which the smooth value is associated belongs to the active CP set of the UE, when the smooth value is greater than or equal to a preset judgment threshold for the active CP set.

2.    The method according to claim 1, wherein the configuring, by a network side, a CP set for the UE comprises:

   configuring, by the network side, the CP set, which comprises all CPs in the super cell, for the UE.

3.    The method according to claim 1, further comprising:

   before the network side determines the active CP set for the UE according to the receiving power of the signal received from the UE in each CP,
   obtaining, by the network side, a number of CPs in the CP set, and
   when the number of the CPs is greater than 1, determining the active CP set according to the receiving power of the signal received from the UE in each CP.

4.    The method according to claim 41, further comprising:

   obtaining, by the network side, the average receiving power in a single RB of each CP according to the receiving power of Physical Uplink Shared Channel, PUSCH, received from the UE in each CP, when the network side does not receive the receiving power of the SRS from the UE in each CP.

5.    An LTE system for implementing wireless communication coverage, comprising a network side and a User Equipment, UE,
   wherein the network side (41) is configured to, after the UE accesses a super cell, configure a CP set for the UE according to CP configuration of the super cell, and determine an active CP set for the UE according to a receiving power of a signal received from the UE in each CP; and

wherein the UE (42) is configured to communicate with a CP in the active CP set normally;
**characterized in that**,
the network side is configured to:

obtain, for each CP, an average receiving power of the UE in a single Resource Block, RB, according to the receiving power of an SRS received from the UE in each CP;
obtain a maximum value of the average receiving powers and acquire a reference receiving power of the UE in each CP according to the maximum value; and
acquire a smooth value of the reference receiving power of the UE in each CP according to the reference receiving power and a preset smooth factor;
wherein a CP with which the smooth value is associated belongs to the active CP set of the UE, when the smooth value is greater than or equal to a preset judgment threshold for the active CP set.

6. The system according to claim 5, wherein the network side is configured to configure a CP set, which comprises all CPs in the super cell, for the UE.

7. The system according to claim 5, wherein the network side is configured to:

obtain a number of CPs in the CP set; and
determine the active CP set according to the receiving power of a signal received from the UE in each CP, when the number of CPs is greater than 1.

8. The system according to claim 5, wherein the network side is further configured to, when not receiving the receiving power of the SRS from the UE in each CP, acquire the average receiving power of the UE in the a single RB of each CP according to the receiving power of PUSCH received from the UE in each CP.

**Patentansprüche**

1. Ein Verfahren zur Implementierung der Versorgung mit drahtloser Kommunikation in einem LTE-System, Folgendes umfassend:

wenn eine Benutzerausrüstung (User Equipment, UE) auf eine Superzelle zugreift, Konfigurieren (101) durch eine Netzwerkseite eines Zellabschnitt-Satzes (Cell Portion, CP) für die UE entsprechend der CP-Konfiguration der Superzelle;
Bestimmen (102) durch die Netzwerkseite eines aktiven CP-Satzes der UE entsprechend einer Empfangsleistung eines Signals, das von der UE in jedem CP empfangen wird; und
normales Kommunizieren (103) durch die UE mit einem CP im aktiven CP-Satz;
**dadurch gekennzeichnet, dass**
das Bestimmen, durch die Netzwerkseite, des aktiven CP-Satzes der UE entsprechend der Empfangsleistung des Signals, das von der UE in jedem CP empfangen wird, Folgendes umfasst:

Erhalten, durch die Netzwerkseite, einer durchschnittlichen Empfangsleistung der UE in einem einzigen Ressourcenblock, RB, von jedem CP entsprechend der Empfangsleistung eines Kanal-Resonanzempfangssignals (Sounding Reference Signal, SRS), das von der UE in jedem CP empfangen wird;
Erhalten, durch die Netzwerkseite, eines Maximalwerts der durchschnittlichen Empfangsleistungen und Erfassen einer Referenz-Empfangsleistung der UE in jedem CP entsprechend dem Maximalwert; und
Erfassen, durch die Netzwerkseite, einen glatten Wert der Referenz-Empfangsleistung der UE in jedem CP entsprechend der Referenz-Empfangsleistung und einem voreingestellten Glättungsfaktor;
wobei ein CP, mit dem dem glatten Wert verknüpft ist, zum aktiven CP-Satz der UE gehört, wenn der glatte Wert größer als oder gleich einem voreingestellten Beurteilungsschwellenwert für den aktiven CP-Satz ist.

2. Das Verfahren gemäß Anspruch 1, wobei das Konfigurieren, durch eine Netzwerkseite, eines CP-Satzes für die UE Folgendes umfasst:

Konfigurieren, durch die Netzwerkseite, des CP-Satzes, der alle CPs in der Superzelle umfasst, für die UE.

3. Das Verfahren gemäß Anspruch 1, das weiter Folgendes umfasst:

bevor die Netzwerkseite den aktiven CP-Satz für die UE entsprechend der Empfangsleistung des Signals bestimmt, das von der UE in jedem CP empfangen wird,

Erfassung, durch die Netzwerkseite, einer Anzahl der CPs im CP-Satz, und

wenn die Anzahl der CPs größer ist als 1, Bestimmen des aktiven CP-Satzes entsprechend der Empfangsleistung des Signals, das von der UE in jedem CP empfangen wird.

**4.** Das Verfahren gemäß Anspruch 1, das weiter Folgendes umfasst:

Erhalten, durch die Netzwerkseite, der durchschnittlichen Empfangsleistung in einem einzigen RB jedes CPs entsprechend der Empfangsleistung des Physikalischen geteilten Uplink Kanals (PUSCH), die von der UE in jedem CP empfangen wird, wenn die Netzwerkseite die Empfangsleistung des SRS nicht von der UE in jedem CP empfängt.

**5.** Ein LTE-System zur Implementierung der Versorgung mit drahtloser Kommunikationsabdechkung, das eine Netzwerkseite und eine Benutzerausrüstung (UE) umfasst,

wobei die Netzwerkseite (41) konfiguriert ist, um, nachdem die UE auf eine Superzelle zugegriffen hat, einen CP-Satz für die UE entsprechend der CP-Konfiguration der Superzelle zu konfigurieren und einen aktiven CP-Satz für die UE entsprechend einer Empfangsleistung eines Signals zu bestimmen, das von der UE in jedem CP empfangen wird; und

wobei die UE (42) konfiguriert ist, um mit einem CP im aktiven CP-Satz normal zu kommunizieren;

**dadurch gekennzeichnet, dass**

die Netzwerkseite konfiguriert ist, um

für jeden CP eine durchschnittliche Empfangsleistung der UE in einem einzigen Ressourcenblock, RB, entsprechend der Empfangsleistung eines SRS zu erhalten, das von der UE in jedem CP empfangen wird;

einen Maximalwert der durchschnittlichen Empfangsleistungen zu erhalten und eine Referenz-Empfangsleistung der UE in jedem CP entsprechend dem Maximalwert zu erfassen; und

einen glatten Wert der Referenz-Empfangsleistung der UE in jedem CP entsprechend der Referenz-Empfangsleistung und einem voreingestellten Glättungsfaktor zu erfassen;

wobei ein CP, mit dem der glatte Wert verknüpft ist, zum aktiven CP-Satz der UE gehört, wenn der glatte Wert größer als oder gleich einem voreingestellten Beurteilungsschwellenwert für den aktiven CP-Satz ist.

**6.** Das System gemäß Anspruch 5, wobei die Netzwerkseite konfiguriert ist, um einen CP-Satz, der alle CPs in der Superzelle umfasst, für die UE zu konfigurieren.

**7.** Das System gemäß Anspruch 5, wobei die Netzwerkseite konfiguriert ist, um

eine Anzahl der CPs im CP-Satz zu erfassen; und

den aktiven CP-Satz entsprechend der Empfangsleistung eines Signals zu bestimmen, das von der UE in jedem CP empfangen wird, wenn die Anzahl der CPs größer ist als 1.

**8.** Das System gemäß Anspruch 5, wobei die Netzwerkseite weiter konfiguriert ist, um, wenn sie nicht die Empfangsleistung des SRS von der UE in jedem CP empfängt, die durchschnittliche Empfangsleistung der UE in einem einzigen RB jedes CPs entsprechend der Empfangsleistung des PUSCH, die von der UE in jedem CP empfangen wird, zu erfassen.

**Revendications**

**1.** Procédé de mise en oeuvre d'une couverture pour communication sans fil dans un système LTE comprenant :

lorsqu'un équipement d'utilisateur, UE, accède à une super-cellule, la configuration (101) par un côté réseau d'un ensemble de parties de cellule, CP, pour l'UE, en fonction de la configuration de CP de la super-cellule ;

la détermination (102) par le côté réseau, d'un ensemble de CP actives de l'UE, en fonction de la puissance de réception d'un signal reçu depuis l'UE dans chaque CP ; et

la communication (103) par l'UE, avec une CP de l'ensemble de CP actives normalement ;

**caractérisé en ce que**,

la détermination par le côté réseau de l'ensemble de CP actives de l'UE en fonction de la puissance de réception du signal reçu depuis l'UE dans chaque CP comprend :

l'obtention, par le côté réseau, d'une puissance de réception moyenne de l'UE dans un bloc de ressources unique, RB, de chaque CP, en fonction de la puissance de réception d'un signal de référence de sondage de canal, SRS, reçu depuis l'UE dans chaque CP ;

l'obtention, par le côté réseau, d'une valeur maximale des puissances de réception moyennes et l'acquisition d'une puissance de réception de référence de l'UE dans chaque CP en fonction de la valeur maximale ; et

l'acquisition, par le côté réseau, d'une valeur lissée de la puissance de réception de référence de l'UE dans chaque CP en fonction de la puissance de réception de référence et d'un facteur de lissage fixé à l'avance ;

dans lequel une CP, à laquelle est associée la valeur de lissage appartient à l'ensemble de CP actives de l'UE, lorsque la valeur de lissage est supérieure ou égale à un seuil d'estimation fixé à l'avance pour l'ensemble de CP actives.

2. Procédé selon la revendication 1, dans lequel la configuration par le côté réseau d'un ensemble de CP pour l'UE comprend :

la configuration par le côté réseau de l'ensemble de CP qui comprend toutes les CP dans la super-cellule pour l'UE.

3. Procédé selon la revendication 1, comprenant en outre :

avant que le côté réseau détermine l'ensemble de CP actives pour l'UE en fonction de la puissance de réception du signal reçu depuis l'UE dans chaque CP,

l'obtention, par le côté réseau, d'un certain nombre de CP de l'ensemble de CP, et

lorsque le nombre de CP est supérieur à 1, la détermination de l'ensemble de CP actives en fonction de la puissance de réception du signal reçu depuis l'UE dans chaque CP.

4. Procédé selon la revendication 1, comprenant en outre :

l'obtention, par le côté réseau, d'une puissance de réception moyenne dans un RB unique de chaque CP en fonction de la puissance de réception du canal partagé de liaison montante physique (PUSCH) reçue depuis l'UE dans chaque CP, lorsque le côté réseau ne reçoit pas la puissance de réception du SRS depuis l'UE dans chaque CP.

5. Système LTE pour mettre en oeuvre une couverture pour communication sans fil comprenant un côté réseau et un équipement d'utilisateur, UE,

dans lequel le côté réseau (41) est configuré pour, après que l'UE, accède à une super-cellule, configurer un ensemble de ensemble de CP pour l'UE, en fonction de la configuration de CP de la super-cellule, et déterminer un ensemble de CP actives de l'UE, en fonction de la puissance de réception d'un signal reçu depuis l'UE dans chaque CP ; et

dans lequel l'UE (42) est configuré pour communiquer avec une CP de l'ensemble de CP actives normalement ;

**caractérisé en ce que**,

le côté réseau est configuré pour :

obtenir pour chaque CP, une puissance de réception moyenne de l'UE dans un bloc de ressources unique, RB, en fonction de la puissance de réception d'un SRS, reçu depuis l'UE dans chaque CP ;

obtenir une valeur maximale des puissances de réception moyennes et acquérir une puissance de réception de référence de l'UE dans chaque CP en fonction de la valeur maximale ; et

acquérir une valeur lissée de la puissance de réception de référence de l'UE dans chaque CP en fonction de la puissance de réception de référence et d'un facteur de lissage fixé à l'avance ;

dans lequel une CP, à laquelle est associée la valeur de lissage appartient à l'ensemble de CP actives de l'UE, lorsque la valeur de lissage est supérieure ou égale à un seuil d'estimation fixé à l'avance pour l'ensemble de CP actives.

6. Système selon la revendication 5, dans lequel le côté réseau est configuré pour configurer un ensemble de CP, qui comprend toutes les CP dans la super-cellule pour l'UE.

7. Système selon la revendication 5, dans lequel le côté réseau est configuré pour :

obtenir un certain nombre de CP de l'ensemble de CP ; et

déterminer l'ensemble de CP actives en fonction de la puissance de réception d'un signal reçu depuis l'UE dans chaque CP, lorsque le nombre de CP est supérieur à 1.

8. Système selon la revendication 5, dans lequel le côté réseau est configuré en outre pour, lors de l'absence de réception de la puissance de réception du SRS depuis l'UE dans chaque CP, acquérir la puissance de réception moyenne de l'UE dans le RB unique de chaque CP, en fonction de la puissance de réception de PUSCH reçue depuis l'UE dans chaque CP.

Fig. 1

| When a UE accesses a super cell, a network side configures a CP set for the UE according to CP configuration of the super cell | 101 |

↓

| The network side determines an active CP set for the UE according to the receiving power of a signal received from the UE in each CP | 102 |

↓

| The UE communicates with a CP in the CP active set normally | 103 |

Fig. 2

A UE accesses a super cell initially — 201

A network side configures a CP set for the UE, wherein there are $N_{CP}$ CPs in the CP set — 202

Judging $N_{CP}$ whether is greater than 1 — 203 — No

Yes

Obtaining the average receiving power of the UE in a single RB of each CP according to the receiving power reported by a physical layer — 204

Obtaining the reference receiving power of the UE in each CP according to the average receiving power — 205

Obtaining the smooth value of reference receiving power of the UE in each CP according to the reference receiving power and a preset smooth factor — 206

Judging whether the smooth value is less than the preset judgment threshold — 207 — Yes

No

Adding the CP to the CP active set — 208

No — Judging whether all the CPS in the CP set are completely determined — 209

Yes

End

Fig. 3

CP0

CP1

CP2

CP3

CP4

CP5

Train UE

time t

Train UE

time t+1

Fig. 4

41

Network side

42

UE